# EUROPÄISCHE PATENTSCHRIFT

(11) **EP 1 774 176 B1**
(45) Veröffentlichungstag und Bekanntmachung des Hinweises auf die Patenterteilung: **02.01.2013**
(21) Anmeldenummer: 05767951.6
(22) Anmeldetag: 14.07.2005
(51) Int. Cl.: F04B 1/04, F04B 53/10, F16K 15/02, F16K 15/04, B60T 8/40

(54) **KOLBENPUMPE MIT VERBESSERTER DRUCKAUFBAUDYNAMIK**
PISTON PUMP WITH IMPROVED PRESSURE BUILD-UP DYNAMICS
POMPE A PISTON A DYNAMIQUE DE MONTEE EN PRESSION AMELIOREE

(30) Priorität: 22.07.2004 DE 102004035452
(43) Veröffentlichungstag der Anmeldung: 18.04.2007
(73) Patentinhaber: ROBERT BOSCH GMBH, 70442 Stuttgart (DE)
(72) Erfinder: HURST, Matthias, 87509 Immenstadt (DE); KOEHNLEIN, Oliver, 85113 Boehmfeld (DE)
(86) Internationale Anmeldenummer: PCT/EP2005/053372
(87) Internationale Veröffentlichungsnummer: WO 2006/008263

(56) Entgegenhaltungen:
- WO-A1-01/91911
- DE-A1- 2 632 826
- DE-A1- 2 824 239
- DE-A1- 4 445 361
- DE-A1- 19 732 810
- US-A- 3 298 394
- US-A- 4 095 617
- US-A- 5 645 406
- US-B1- 6 471 496
- US-B2- 6 764 286

## Beschreibung

### Stand der Technik

Die vorliegende Erfindung betrifft eine Kolbenpumpe gemäß den gattungsbildenden Merkmalen des Anspruchs 1.

Eine derartige Kolbenpumpe ist beispielsweise aus der WO 01/91911 A1 bereits bekannt. Der Anspruch 1 ist in zweiteiliger Form gegenüber der Offenbarung dieser Druckschrift abgefasst.

Diese Kobenpumpe umfasst einen hin und her bewegbaren Kolben, einen Druckraum und ein Ventil mit einem Federdichtelement. Das Ventil bildet das Einlassventil der Kolbenpumpe und ist derart in einem Zylinderelement angeordnet, dass die Einströmrichtung des Fluids in den Druckraum gleich der Bewegungsrichtung des Kolbens in einer Ansaugphase der Kolbenpumpe ist.

Zur Rückstellung des Kolbens nach seiner Betätigung in die Ausgangslage ist ein elastisches Rückstellelement vorhanden. Dieses ist als ein Faltenbalg ausgebildet, der außerhalb des Druckraums der Kolbenpumpe angeordnet ist und der das Zylinderelement umfangseitig umschließt. Dadurch nimmt die Kolbenpumpe verhältnismäßig viel Bauraum ein. Das Rückstellelement ist an einem Betätigungselement und an einem Gehäusebauteil verankert und damit Umwelteinflüssen ausgesetzt. Eine Befestigung des Federdichtelements im Zylinderelement erfolgt mittels am Federelement angeformten Fortsätzen, welche in konstruktiv angepasste Ausnehmungen am Zylinderelement eingreifen und einen Kraftschluss zwischen beiden Bauteilen bewirken. Die Ausnehmungen sind in Einströmrichtung des Fluids, also in Richtung des Druckraums hin offen, so dass ein vom einströmenden Fluid aufgebauter Staudruck ein Lösen des Federdichtelement aus seiner Verankerung bewirken bzw. dessen Zentrierung gegenüber dem Ventilsitz stören kann. Beides beeinträchtigt die Funktionsfähigkeit bzw. die Funktionseigenschaften der Kolbenpumpe. Zudem ist zur Realisierung der Verankerungsmittel an den Einzelteilen der Kolbenpumpe und zur Herstellung der Verankerung bei der Montage der Kolbenpumpe ein erhöhter Aufwand erforderlich.

Weitere Kolbenpumpen sind beispielsweise aus der US 6,764,286 B2 oder aus der US 5,645,406 A bekannt. Diese Kolbenpumpen weisen ebenfalls einen hin- und her bewegbaren Kolben und ein Ventil mit einem Federdichtelement auf. Einlassöffnungen dieser Kolbenpumpen sind derart angeordnet, dass in den Druckraum einströmendes Hydraulikfluid quer bzw. entgegen der Bewegungsrichtung des Kolbens strömt, wenn sich dieser Kolben in der Ansaugphase befindet. Derart durchströmte Kolbenpumpen haben Nachteile hinsichtlich auftretender Strömungswiderstände und damit hinsichtlich ihres hydraulischen Wirkungsgrads. Dies wirkt sich negativ auf die Druckaufbaudynamik eines mit derartigen Kolbenpumpen bestückten Hydraulikkreises aus. Insbesondere bei schlupfregelbaren Bremsanlagen von Kraftfahrzeugen ist eine hohe Druckaufbaudynamik wichtig, um die Bremsdrücke an den Radbremsen mit wenig Zeitverzug an sich ändernde Schlupfverhältnisse an den Rädern anzupassen. Vorhandene Rückstellfedern liegen außerhalb des Druckraums bzw. stützen sich nicht gegen einen Haltebereich des Federdichtelements ab.

### Vorteile der Erfindung

Eine erfindungsgemäße Kolbenpumpe mit den Merkmalen des Patentanspruchs 1 weist demgegenüber den Vorteil auf, dass das Federdichtelement mit Hilfe der Rückstellfeder des Kolbens zuverlässig und insbesondere ohne zusätzliche Verankerungsmittel in einem Zylinderelement der Kolbenpumpe lagefixiert ist. Da eine Durchströmungsrichtung des Einlassventils gleich einer Bewegungsrichtung des Kolbens in der Ansaugphase der Kolbenpumpe ist, baut die Kolbenpumpe relativ kurz. Zudem lässt sich ein besonders strömungsgünstiger Verlauf für das Hydraulikfluid beim Einströmen in den Druckraum erreichen und folglich weist die Kolbenpumpe einen verbesserten hydraulischen Wirkungsgrad auf.

Weiterhin zeichnet sich eine erfindungsgemäße Kolbenpumpe durch eine geringe Bauteileanzahl auf. Dadurch können die Herstell- und Montagekosten deutlich reduziert werden. Durch die verringerte Bauteileanzahl weist die Kolbenpumpe ferner eine geringe Größe, insbesondere in Axialrichtung auf, weil ein einstückiges Federdichtelement die Funktion eines Ventilschließelements als auch die Funktion einer Ventilfeder umfasst.

Weitere Vorteile oder vorteilhafte Weiterbildungen der Erfindung ergeben sich aus den Unteransprüchen und der nachfolgenden Beschreibung.

Vorzugsweise ist das Federdichtelement als plattenförmiges Element ausgebildet und umfasst einen Dichtbereich und einen Federbereich. Dadurch kann die erfindungsgemäße Kolbenpumpe besonders kompakt und klein bauend ausgebildet sein, da für das Ventil nur ein Platzbedarf entsprechend der Dicke des plattenförmigen Elements benötigt wird. Weiterhin ist am Federdichtelement integral noch ein Haltebereich gebildet.

Besonders bevorzugt ist der Federbereich des Federdichtelements derart ausgebildet, dass er mindestens eine Federwindung umfasst.

Weiter bevorzugt ist der Haltebereich des Federdichtelements ringförmig ausgebildet. Dadurch kann einerseits eine schnelle und einfache Fixierung des Federdichtelements erreicht werden und andererseits gibt der ringförmige Haltebereich dem Federdichtelement eine gewisse Stabilität.

Um eine verbesserte Dichtungswirkung zu erhalten, dichtet das Federdichtelement vorzugsweise an einer Durchgangsöffnung in einer Ventilplatte ab. Hierbei übernimmt die Ventilplatte die Funktion eines Ventilsitzes. Die Ventilplatte ist besonders bevorzugt aus einem Kunststoff, insbesondere aus PEEK, hergestellt. Weiter bevorzugt kann der Kunststoff auch mittels Kohlefasern verstärkt sein.

Durch seinen integralen Aufbau ermöglicht das Federdichtelement, dass ein Schadraum der Kolbenpumpe minimal gehalten werden kann. Weiterhin wird es möglich, dass eine Einlassbohrung der Kolbenpumpe einen sehr großen Durchmesser aufweist, so dass ein möglichst geringer Strömungswiderstand in der Ansaugphase durch die Einlassbohrung erhalten werden kann. Dadurch kann der Wirkungsgrad der Pumpe weiter verbessert werden.

Das plattenförmige Federdichtelement ist somit eine Art Blattfeder, welche über einer Durchgangsöffnung des Ventils angeordnet ist, und einen scheibenförmigen Dichtbereich aufweist, der einen Durchmesser hat, der etwas größer als der Durchmesser der Durchgangsöffnung ist. Eine Abdichtung erfolgt somit am Rand des scheibenförmigen Dichtbereichs.

Weiterhin kann eine Kolbenpumpe mit einem sehr kleinen Bauraum in Radialrichtung des Kolbens erreicht werden. Dies wird dadurch erreicht, dass vorzugsweise ein Federelement eines Ventils der Kolbenpumpe als Federring ausgebildet ist. Durch die Ausbildung des Federelements als Federring kann das Federelement neben der Federfunktion derart an der Kolbenpumpe angeordnet werden, dass keine zusätzlichen Bauteile zur Fixierung des Federringes notwendig sind, da der Federring aufgrund seiner Ringform ohne weitere Bauteile an einem vorhandenen Bauteil der Kolbenpumpe fixierbar ist.

Vorzugsweise weist der Federring einen Schlitz auf. Hierbei kann durch unterschiedliche Ausgestaltung des Schlitzes die Federkraft des Federrings eingestellt werden. Somit kann für unterschiedliche Anwendungsfälle ein Federring vorgesehen werden, dessen Federkraft durch verschiedenartige Ausgestaltung des Schlitzes im Federring variierbar ist. Der Schlitz im Federring ist dabei besonders bevorzugt Z-förmig ausgebildet. Der Schlitz durchtrennt den Federring vorzugsweise in dessen Breite, so dass der Federring in Umfangsrichtung unterbrochen ist. Es ist jedoch auch möglich, mehrere Schlitze im Federring vorzusehen, die den Federring in dessen Breite nicht vollständig unterteilen.

Vorzugsweise ist der Federring in einer Nut angeordnet, welche in einem Zylinderelement der Kolbenpumpe ausgebildet ist. Dadurch kann ein besonders kompakter Aufbau realisiert werden.

Um ein Ventilschließelement am Federring zu fixieren, weist der Federring vorzugsweise eine Ausnehmung an seiner Innenseite auf. Die Ausnehmung ist vorzugsweise eine U-förmige Rinne oder eine teilkugelförmige Ausnehmung, wenn das Ventilschließelement eine Kugel ist. Dies ermöglicht eine Selbstzentrierung der Kugel.

Besonders bevorzugt ist das den Federring umfassende Ventil ein Auslassventil der Kolbenpumpe.

Vorzugsweise ist eine Durchgangsöffnung, welche durch das Auslassventil freigebbar bzw. verschließbar ist, derart in einem Zylinderelement der Kolbenpumpe angeordnet, dass eine Bewegungsrichtung des Kolbens senkrecht zu einer Ausströmrichtung durch die Durchgangsöffnung ist.

Die erfindungsgemäße Kolbenpumpe wird besonders bevorzugt in Bremsanlagen von Fahrzeugen, beispielsweise zur Steuerung und Regelung eines Drucks in einem Radbremszylinder, verwendet. Vorzugsweise wird die erfindungsgemäße Kolbenpumpe dabei in Verbindung mit elektronischen Steuerungs- und Regelungssystemen der Bremsanlage, wie z.B. ESP, EHB, ASR, usw. verwendet. Hierdurch lassen sich einerseits Kostenvorteile für derartige Bremsanlagen erreichen, da die erfindungsgemäße Kolbenpumpe besonders kostengünstig herstellbar ist, und andererseits kann ein Wirkungsgrad der Kolbenpumpen und eine verbesserte Druckaufbaudynamik erreicht werden, so dass die Ansprechzeiten derartiger Bremssysteme reduziert werden können.

### Zeichnung

Die Erfindung wird nachfolgend anhand eines bevorzugten Ausführungsbeispiels in Verbindung mit der Zeichnung im Detail beschrieben. In der Zeichnung ist:
- Figur 1: eine schematische Schnittansicht einer Kolbenpumpe gemäß einem Ausführungsbeispiel der vorlegenden Erfindung,
- Figur 2: eine schematische, geschnittene perspektivische Ansicht der in Figur 1 gezeigten Kolbenpumpe,
- Figur 3: eine perspektivische Explosionsdarstellung von Einzelbauteilen der in den Figuren 1 und 2 gezeigten Kolbenpumpe,
- Figur 4: eine schematische Draufsicht eines Federdichtelements gemäß dem Ausführungsbeispiel der Erfindung und
- Figur: 5 eine schematische Draufsicht eines Federrings gemäß dem Ausführungsbeispiel der Erfindung.

### Beschreibung des Ausführungsbeispiels

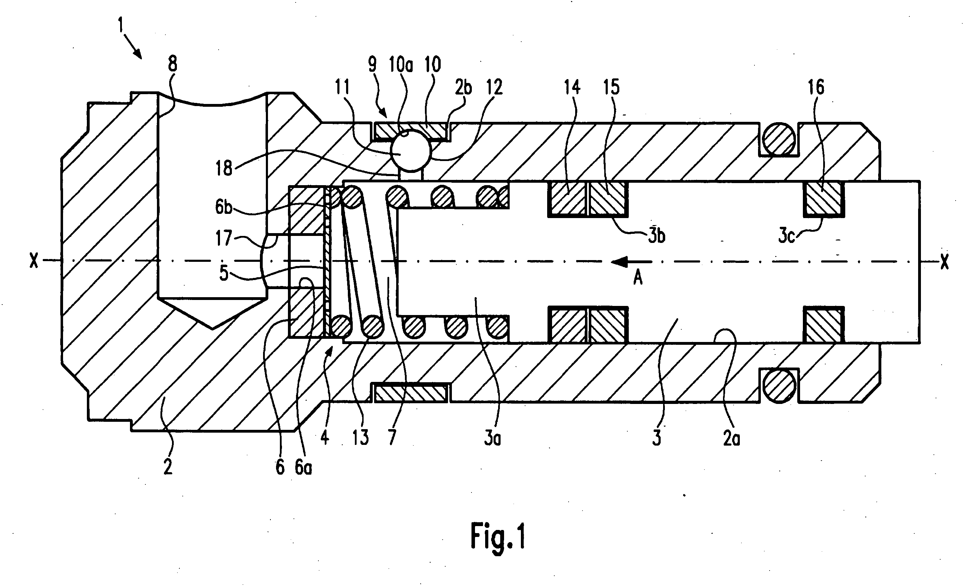

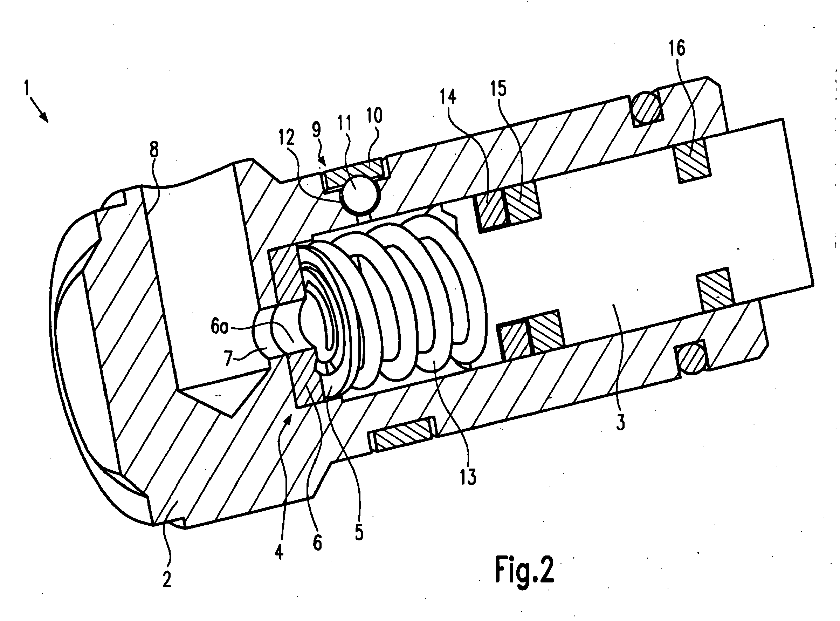

Nachfolgend wird unter Bezugnahme auf die Figuren 1 bis 5 eine Kolbenpumpe 1 gemäß einem bevorzugten Ausführungsbeispiel der Erfindung beschrieben.

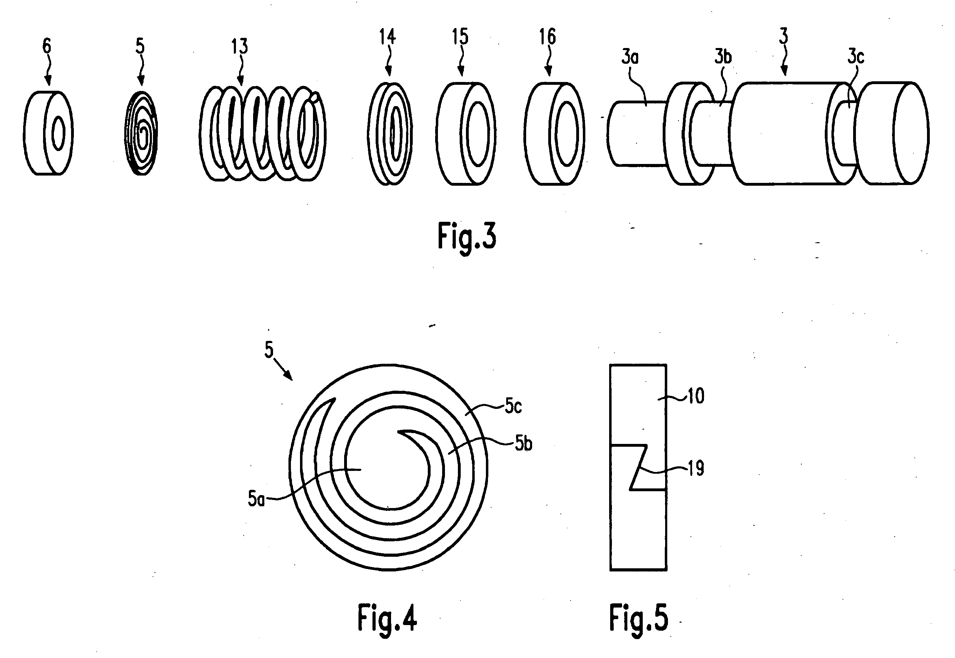

Wie aus Figur 1 ersichtlich ist, umfasst die Kolbenpumpe 1 gemäß dem bevorzugten Ausführungsbeispiel der Erfindung ein Zylinderelement 2 mit einer Zylinderbohrung 2a. In der Zylinderbohrung 2a ist ein Kolben 3 angeordnet, welcher im Detail aus Figur 3 ersichtlich ist. Der Kolben 3 umfasst einen Kolbenzapfen 3a sowie zwei Ringnuten 3b und 3c und wird mittels eines nicht gezeigten Exzenters bewegt.

In der Zylinderbohrung 2a ist ein Druckraum 7 vorgesehen, welcher zwischen einem Einlassventil 4 und einem Auslassventil 9 hydraulisch angeordnet ist. Das Einlassventil 4 umfasst im Wesentlichen ein Federdichtelement 5, welches im Detail in Figur 4 gezeigt ist. Das Federdichtelement 5 ist, wie aus Figur 1 ersichtlich ist, plattenförmig ausgebildet und umfasst einen scheibenförmigen Dichtbereich 5a, einen Federbereich 5b und einen Haltebereich 5c. Der Federbereich 5b ist als eine Federwindung ausgebildet und verbindet den Dichtbereich 5a mit dem Haltebereich 5c. Das Federdichtelement 5 ist an einer Ventilplatte 6 angeordnet und dichtet an einem Dichtsitz 6b der Ventilplatte 6 ab. Der Dichtsitz 6b ist dabei entlang des Umfangs einer Durchgangsbohrung 6a in der Ventilplatte 6 angeordnet. Somit dichtet das Federdichtelement 5 mit einem ringförmigen äußeren Umfangsbereich des Dichtbereichs 5a am Dichtsitz 6b ab.

Hydraulikfluid strömt zum Einlassventil 4 über eine Zufuhrleitung 8 und eine Verbindungsbohrung 17, welche den gleichen Durchmesser wie die Durchgangsbohrung 6a der Ventilplatte 6 aufweist (vgl. Figur 1). Die Ventilplatte 6 ist dabei aus einem Kunststoffmaterial, insbesondere PEEK, hergestellt.

Das Auslassventil 9 umfasst, wie in Figur 1 gezeigt, einen Federring 10 und eine Kugel 11. Die Kugel 11 dichtet an einem Dichtsitz 12 ab, welcher im Zylinderelement 2 gebildet ist. Das Auslassventil 9 ist an einer Auslassbohrung 18 angeordnet und dichtet den Druckraum 7 der Kolbenpumpe gegen eine nicht dargestellte Druckleitung ab. Im Druckraum 7 ist weiter eine Rückstellfeder 13 angeordnet, um den Kolben 3 nach Erreichen seines oberen Totpunktes wieder in seine Ausgangsposition zurückzustellen. Wie in Figur 1 dargestellt, stützt sich die Rückstellfeder 13 am Haltebereich 5c des Federdichtelements 5 ab. Dadurch wird eine zusätzliche Fixierung des Federdichtelements 5 in der Zylinderbohrung 2a erhalten. Es sei angemerkt, dass das Federdichtelement 5 mit einer leichten Überpressung in die Zylinderbohrung 2a montiert werden kann, so dass auch die Montage des Federdichtelements 5 sehr einfach ist.

Durch den Kolbenzapfen 3a des Kolbens 3 wird erreicht, dass ein Schadraum im Druckraum 7 möglichst gering ist. Weiterhin dient der Kolbenzapfen 3 zur Führung der Rückstellfeder 13. Am Kolben 3 sind ferner ein Dichtring 14, ein erster Führungsring 15 und ein zweiter Führungsring 16 angeordnet. Wie aus den Figuren 1 und 3 ersichtlich ist, ist der Dichtring 14 und der erste Führungsring 15 in der im Kolben 3 gebildeten Nut 3b angeordnet und der zweite Führungsring 16 ist in der im Kolben 3 gebildeten Nut 3c angeordnet. Der Dichtring 14 dichtet dabei den Druckraum 7 der Kolbenpumpe gegen einen Exzenterraum ab. Durch die Führung des Kolbens 3 in der Zylinderbohrung 2a mittels des ersten und zweiten Führungsrings 15 und 16 kann eine sehr steife Führung des Kolbens erreicht werden.

Die beiden Führungsringe 15 und 16 weisen einen relativ großen Abstand voneinander auf, so dass eine Kippbewegung des Kolbens praktisch ausgeschlossen werden kann. Die Führung des Kolbens 3 ist damit sehr unempfindlich, insbesondere gegen Seitenkräfte auf den Kolben 3, welche von dem Exzenterantrieb auf den Kolben übertragen werden können.

Wie weiter aus Figur 1 ersichtlich ist, ist am inneren Umfang des Federrings 10 eine Ausnehmung 10a gebildet, um die Kugel 11 teilweise aufzunehmen. Die Ausnehmung 10a weist dabei im Schnitt eine U-förmige Form auf. Wie weiter aus Figur 1 ersichtlich ist, ist der Federring 10 in einer Nut 2b angeordnet, welche an einem äußeren Umfang des Zylinderelements 2 gebildet ist. Der Federring 10 ist als geschlossener Ring gebildet und weist einen Schlitz 19 auf, um eine gewisse Elastizität für den Öffnungsvorgang des Auslassventils bereitzustellen. Der Schlitz 19 ist vorzugsweise Z-förmig ausgeführt und vorzugsweise am Federring 10 gegenüber der Position der Kugel 11 gebildet (vgl. Figur 5). Es sei angemerkt, dass die Form des Schlitzes beliebig wählbar ist und durch die Form des Schlitzes insbesondere die Öffnungskraft des Federrings 10 beeinflusst wird. Der Schlitz des Federrings 10 kann dabei einerseits nur teilweise in den Federring 10 reichen oder vollständig den Federring 10 durchteilen, so dass der Federring am Schlitz aufweitbar ist. Es ist auch möglich, mehrere Schlitze am Federring vorzusehen, die den Federring 10 nicht vollständig durchteilen.

Die Funktion der erfindungsgemäßen Kobenpumpe 1 ist dabei wie folgt. In einer Ansaugphase der Kolbenpumpe bewegt sich der Kolben 3 in Figur 1 nach rechts. Dadurch öffnet das Federdichtelement 5, indem der Dichtbereich 5a von seinem Dichtsitz 6b an der Ventilplatte 6 abgehoben wird. Dadurch strömt Hydraulikfluid aus der Zufuhrleitung 8 über die Verbindungsbohrung 17 und die Durchgangsbohrung 6a in den Druckraum 7. In der Ansaugphase ist das Auslassventil 9 geschlossen, da ein in einer dem Auslassventil 9 nachgeordneten, nicht dargestellten Druckleitung, vorhandener Druck gegen den Federring 10 ansteht und die Kugel 11 somit auf dem Dichtsitz 12 gehalten wird. Grundsätzlich ist anzumerken, dass der AV-Öffnungsdruck durch die Auslegung des Federringes definiert wird. Nachdem der Kolben 3 seinen unteren Totpunkt erreicht hat, und sich die Richtung des Kolbens 3 umkehrt, beginnt die Druckphase der Kolbenpumpe 1. Dieser Zustand ist in Figur 1 dargestellt. In der Druckphase bewegt sich der Kolben 3 in Figur 1 in Richtung des Pfeils A, so dass Druck im Druckraum 7 aufgebaut wird. Dadurch schließt das Einlassventil 4, da der Druck aus dem Druckraum 7 gegen den scheibenförmigen Dichtbereich 5a anliegt. Da der scheibenförmige Dichtbereich 5a eine relativ große Fläche aufweist, wird ein schnelles Schließen des Einlassventils sichergestellt. Je weiter sich der Kolben 3 in Richtung seines oberen Totpunktes bewegt, um so größer wird der Druck im Druckraum 7. Wenn der Druck im Druckraum 7 größer als in einer dem Auslassventil 9 nachgeschalteten Druckleitung wird, öffnet das Auslassventil 9, indem der Federring 10 aufgrund seiner elastischen Eigenschaften durch die Kugel 11 radial nach außen gedrückt wird, so dass eine Verbindung zwischen dem Druckraum 7 über die Auslassbohrung 18 und das geöffnete Auslassventil zur Druckleitung geöffnet ist. Grundsätzlich ist anzumerken, dass der AV-Öffnungsdruck durch die Auslegung des Federringes definiert wird. Dieser Zustand wird kurz vor dem Erreichen des oberen Totpunkts des Kolbens erreicht. Unter Druck stehendes Fluid strömt somit aus dem Druckraum 7 durch das geöffnete Auslassventil 9 in die Druckleitung. Nachdem der Kolben 3 den oberen Totpunkt erreicht hat, kehrt sich seine Bewegungsrichtung wieder um und die Ansaugphase beginnt von,Neuem, wobei das Auslassventil 9 durch die Federkraft des Federrings 10 und den in der Druckleitung auf den Federring wirkenden Druck wieder geschlossen wird. Der Kolben 3 wird mittels der Rückstellfeder 13 wieder zurückgestellt, wobei die Ansaugphase wieder beginnt.

Wie aus Figur 1 ersichtlich ist, kann die erfindungsgemäße Kolbenpumpe 1 einen sehr kompakten Aufbau aufweisen, da das Einlassventil 4 praktisch nur aus dem einstückigen Federdichtelement 5 besteht. Dadurch kann in Axialrichtung X-X des Kolbens 3 ein besonders kompakter Aufbau realisiert werden. Obwohl das Einlassventil 4 im Druckraum 7 der Kolbenpumpe 1 angeordnet ist, wird dadurch kein zusätzlicher Schadraum geschaffen. Weiterhin kann durch die erfindungsgemäße Ausbildung des Einlassventils 4 eine große Zuströmbohrung (Verbindungsbohrung 17 bzw. Durchgangsbohrung 6a) erhalten werden, so dass ein sehr hoher Füllgrad des Druckraums bei minimiertem Schadraum und damit eine sehr gute Druckaufbaudynamik erreicht wird. Weiterhin ist eine Einströmrichtung des Hydraulikfluids durch das Einlassventil 4 gleich wie eine Bewegungsrichtung des Kolbens 3 in der Ansaugphase. Dadurch kann eine weitere Reduzierung der Verluste während des Einströmens des Fluids in den Druckraum 7 erreicht werden.

Das Auslassventil 9 ist ebenfalls mit sehr wenigen, kostengünstigen Bauteilen aufgebaut und umfasst nur die Kugel 11 sowie den Federring 10. Der Federring 10 ist vorzugsweise ebenfalls aus Kunststoff hergestellt und die Montage des Auslassventils 9 ist sehr einfach und kostengünstig. Durch die Ausnehmung 10a am inneren Umfang des Federringes wird auch eine lagerichtige Montage des Federringes vereinfacht.

Die Ausnehmung 10a an der Innenseite des Federrings 10 zur Aufnahme der Kugel 11 hat weiterhin die Funktion, dass eine Verdrehung des Federrings 10 gegenüber dem Zylinderelement 2 verhindert wird. Die Federkraft des Federrings 10 wird neben der Art des Schlitzes auch durch die Dicke, Breite und Materialzusammensetzung definiert.

Die erfindungsgemäße Kolbenpumpe weist somit eine reduzierte Bauteilezahl auf, so dass eine sehr einfache Montage insbesondere des Einlassventils 4 und des Auslassventils 9 gegeben ist und die Herstellkosten sehr gering sind. Durch die Ausbildung des plattenförmigen Federdichtelements 5 für das Einlassventil und des Federrings 10 für das Auslassventil kann ein sehr kompakter Aufbau der Kolbenpumpe erreicht werden.

Während der Druckphase der Kolbenpumpe 1 wird durch den steigenden Druck im Druckraum 7 auch eine verbesserte Abdichtung am Einlassventil 4 erreicht, da der Druck unmittelbar am Dichtbereich 5a anliegt und der Dichtbereich 5a eine relativ große Fläche aufweist.

## Patentansprüche

1. Kolbenpumpe zur Förderung von Hydraulikfluid,
umfassend einen hin- und her bewegbaren Kolben (3), um Druck in einem Druckraum (7) aufzubauen und
zumindest ein Ventil (4) mit einem Federdichtelement (5), wobei das Federdichtelement (5) einen Dichtbereich (5a) und einen Federbereich (5b) aufweist, um eine Öffnung (6a) freizugeben und zu verschließen,
wobei das Ventil (4) den Druckraum (7) begrenzt
und wobei das Ventil (4) mit dem Federdichtelement (5) als Einlassventil der Kolbenpumpe (1) ausgebildet ist und derart im Zylinderelement (2) angeordnet ist, dass eine Einströmrichtung des Hydraulikfluids durch eine Einlassöffnung (17) in den Druckraum (7) der Kolbenpumpe (1) gleich einer Bewegungsrichtung des Kolbens (3) in einer Ansaugphase der Kolbenpumpe (1) ist,
**dadurch gekennzeichnet,**
**dass** eine Rückstellfeder (13) für den Kolben (3) im Druckraum (7) angeordnet ist und sich gegen den Haltebereich (5c) des Federdichtelements (5) abstützt.

2. Kolbenpumpe nach Anspruch 1, **dadurch gekennzeichnet,**
**dass** das Federdichtelement (5) als plattenförmiges Element ausgebildet ist und den Dichtbereich (5a), den Federbereich (5b) und einen Haltebereich (5c) aufweist.

3. Kolbenpumpe nach Anspruch 1 oder 2, **dadurch gekennzeichnet,**
**dass** der Federbereich (5b) des Federdichtelements (5) mindestens eine Federwindung umfasst.

4. Kolbenpumpe nach Anspruch 2 oder 3, **dadurch gekennzeichnet, dass** der Haltebereich (5c) des Federdichtelements (5) ringförmig ausgebildet ist.

5. Kolbenpumpe nach einem der vorhergehenden Ansprüche, **dadurch gekennzeichnet, dass** das Federdichtelement (5) an einem Dichtsitz (6b) einer Ventilplatte (6) abdichtet.

6. Kolbenpumpe nach einem der vorhergehenden Ansprüche, **dadurch gekennzeichnet, dass** das Einlassventil und ein Auslassventil der Kolbenpumpe ein Federdichtelement aufweisen.

7. Kolbenpumpe nach einem der vorhergehenden Ansprüche, **dadurch gekennzeichnet, dass** ein Ventil (9) ein Ventilschließelement (11) und ein Federelement umfasst, um eine Durchgangsöffnung (18) freizugeben und zu verschließen, wobei das Federelement als Federring (10) ausgebildet ist.

8. Kolbenpumpe nach Anspruch 7, **dadurch gekennzeichnet, dass** der Federring (10) einen Schlitz (19) aufweist.

9. Kolbenpumpe nach Anspruch 8, **dadurch gekennzeichnet, dass** der Schlitz (19) den Federring (10) in der Breite des Federrings durchtrennt und der Schlitz (19) im Wesentlichen Z-förmig ausgebildet ist.

10. Kolbenpumpe nach Anspruch 8 oder 9, **dadurch gekennzeichnet, dass** der Federring (10) in einer Nut (2b) in einem Zylinderelement (2) der Kolbenpumpe angeordnet ist.

11. Kolbenpumpe nach einem der Ansprüche 8 bis 10, **dadurch gekennzeichnet, dass** der Federring (10) eine Ausnehmung (10a) an einer Innenseite aufweist, um das Ventilschließelement (11) zumindest teilweise aufzunehmen.

12. Kolbenpumpe nach einem der Ansprüche 8 bis 11, **dadurch gekennzeichnet, dass** das Ventil (9) als Auslassventil der Kolbenpumpe ausgebildet ist.

13. Kolbenpumpe nach Anspruch 12, **dadurch gekennzeichnet, dass** eine Durchgangsöffnung (18), welche vom Auslassventil freigebbar und verschließbar ist, derart im Zylinderelement (2) der Kolbenpumpe angeordnet ist, dass eine Bewegungsrichtung des Kolbens (3) senkrecht zu einer Ausströmrichtung durch die Durchgangsöffnung (18) ist.

14. Bremsanlage oder Stabilitätssystem für ein Fahrzeug, umfassend eine Kolbenpumpe nach einem der vorhergehenden Ansprüche.

## Claims

1. Piston pump for delivering hydraulic fluid, comprising a piston (3), which is movable in a reciprocating manner, for building up pressure in a pressure chamber (7), and
at least one valve (4) having a spring sealing element (5), wherein the spring sealing element (5) has a sealing region (5a) and a spring region (5b) in order to open up and close off an orifice (6a),
wherein the valve (4) delimits the pressure chamber (7)
and wherein the valve (4) with the spring sealing element (5) is formed as an inlet valve of the piston pump (1) and is arranged in the cylinder element (2) in such a way that an inflow direction of the hydraulic fluid through an inlet orifice (17) into the pressure chamber (7) of the piston pump (1) is the same as a movement direction of the piston (3) during a suction phase of the piston pump (1),
**characterized**
**in that** a restoring spring (13) for the piston (3) is arranged in the pressure chamber (7) and is supported against the retention region (5c) of the spring sealing element (5).

2. Piston pump according to Claim 1, **characterized in that** the spring sealing element (5) is in the form of a plate-shaped element and has the sealing region (5a), the spring region (5b) and a retention region (5c).

3. Piston pump according to Claim 1 or 2, **characterized**
**in that** the spring region (5b) of the spring sealing element (5) comprises at least one spring winding.

4. Piston pump according to Claim 2 or 3, **characterized in that** the retention region (5c) of the spring sealing element (5) is of annular form.

5. Piston pump according to one of the preceding claims, **characterized in that** the spring sealing element (5) seals off against a sealing seat (6b) of a valve plate (6).

6. Piston pump according to one of the preceding claims, **characterized in that** the inlet valve and an outlet valve of the piston pump have a spring sealing element.

7. Piston pump according to one of the preceding claims, **characterized in that** a valve (9) comprises a valve closing element (11) and a spring element in order to open up and close off a passage orifice (18), wherein the spring element is in the form of a spring ring (10).

8. Piston pump according to Claim 7, **characterized in that** the spring ring (10) has a slot (19).

9. Piston pump according to Claim 8, **characterized in that** the slot (19) divides the spring ring (10) in the width direction of the spring ring, and the slot (19) is of substantially Z-shaped form.

10. Piston pump according to Claim 8 or 9, **characterized in that** the spring ring (10) is arranged in a groove (2b) in a cylinder element (2) of the piston pump.

11. Piston pump according to one of Claims 8 to 10, **characterized in that** the spring ring (10) has, on an inner side, a recess (10a) for at least partially receiving the valve closing element (11).

12. Piston pump according to one of Claims 8 to 11, **characterized in that** the valve (9) is formed as an outlet valve of the piston pump.

13. Piston pump according to Claim 12, **characterized in that** a passage orifice (18) which can be opened up and closed off by the outlet valve is arranged in the cylinder element (2) of the piston pump in such a way that a movement direction of the piston (3) is perpendicular to an outflow direction through the passage orifice (18).

14. Brake system or stability system for a vehicle, comprising a piston pump according to one of the preceding claims.

## Revendications

1. Pompe à piston pour refouler du fluide hydraulique, comprenant un piston alternatif (3) pour augmenter la pression dans un espace de pression (7) et
au moins une soupape (4) avec un élément d'étanchéité à ressort (5), l'élément d'étanchéité à ressort (5) présentant une région d'étanchéité (5a) et une région de ressort (5b) afin de libérer une ouverture (6a) et de la fermer,
la soupape (4) limitant l'espace de pression (7) et la soupape (4) étant réalisée avec l'élément d'étanchéité à ressort (5) sous forme de soupape d'admission de la pompe à piston (1), et étant disposée dans l'élément de cylindre (2) de telle sorte qu'une direction d'afflux du fluide hydraulique à travers une ouverture d'admission (17) dans l'espace de pression (7) de la pompe à piston (1) soit égale à une direction de déplacement du piston (3) dans une phase d'aspiration de la pompe à piston (1) ;
**caractérisée en ce**
**qu'**un ressort de rappel (13) pour le piston (3) est disposé dans l'espace de pression (7) et s'appuie contre la région de retenue (5c) de l'élément d'étanchéité à ressort (5).

2. Pompe à piston selon la revendication 1, **caractérisée en ce que**
l'élément d'étanchéité à ressort (5) est réalisé sous forme d'élément en forme de plaque et présente la région d'étanchéité (5a), la région de ressort (5b) et une région de retenue (5c).

3. Pompe à piston selon la revendication 1 ou 2, **caractérisée en ce que**
la région de ressort (5b) de l'élément d'étanchéité à ressort (5) comprend au moins un enroulement de ressort.

4. Pompe à piston selon la revendication 2 ou 3, **caractérisée en ce que** la région de retenue (5c) de l'élément d'étanchéité à ressort (5) est réalisée sous forme annulaire.

5. Pompe à piston selon l'une quelconque des revendications précédentes, **caractérisée en ce que** l'élément d'étanchéité à ressort (5) réalise l'étanchéité sur un siège d'étanchéité (6b) d'une plaque de soupape (6).

6. Pompe à piston selon l'une quelconque des revendications précédentes, **caractérisée en ce que** la soupape d'admission et une soupape d'échappement de la pompe à piston présentent un élément d'étanchéité à ressort.

7. Pompe à piston selon l'une quelconque des revendications précédentes, **caractérisée en ce qu'**une soupape (9) comprend un élément de fermeture de soupape (11) et un élément de ressort, afin de libérer une ouverture de passage (18) et de la fermer, l'élément de ressort étant réalisé sous forme de bague élastique (10).

8. Pompe à piston selon la revendication 7, **caractérisée en ce que** la bague élastique (10) présente une fente (19).

9. Pompe à piston selon la revendication 8, **caractérisée en ce que** la fente (19) sépare la bague élastique (10) dans la largeur de la bague élastique et la fente (19) est réalisée essentiellement en forme de Z.

10. Pompe à piston selon la revendication 8 ou 9, **caractérisée en ce que** la bague élastique (10) est disposée dans une rainure (2b) dans un élément de cylindre (2) de la pompe à piston.

11. Pompe à piston selon l'une quelconque des revendications 8 à 10, **caractérisée en ce que** la bague élastique (10) présente un évidement (10a) au niveau d'un côté intérieur, afin de recevoir au moins en partie l'élément de fermeture de soupape (11).

12. Pompe à piston selon l'une quelconque des revendications 8 à 11, **caractérisé en ce que** la soupape (9) est réalisée sous forme de soupape d'échappement de la pompe à piston.

13. Pompe à piston selon la revendication 12, **caractérisée en ce qu'**une ouverture de passage (18) qui peut être libérée et fermée par la soupape d'échappement, est disposée dans l'élément de cylindre (2) de la pompe à piston de telle sorte qu'une direction de déplacement du piston (3) soit perpendiculaire à une direction de sortie du flux à travers l'ouverture de passage (18).

14. Installation de frein ou système de stabilisation pour un véhicule, comprenant une pompe à piston selon l'une quelconque des revendications précédentes.
